# EUROPEAN PATENT APPLICATION

(11) **EP 4 297 209 A1**
(43) Date of publication of application: **27.12.2023**
(21) Application number: 22180428.9
(22) Date of filing: 22.06.2022
(51) Int. Cl.: H02G 3/00, H01R 4/02, H01R 4/38

(54) **METHOD FOR CONNECTING CONDUCTORS IN A PREFABRICATED CABLE ACCESSORY**

(71) Applicant: NKT HV Cables AB, 371 60 Lyckeby (SE)
(72) Inventor: ABBASI, Amirhossein, Lyckeby (SE); JÄDERBERG, Johan, Lyckeby (SE); HANSSON, Ola, Karlskrona (SE); GUSTAFSSON, Kristian, Karlskrona (SE)
(74) Representative: Kransell & Wennborg KB

(57) **Abstract**

A method is disclosed for connecting a first and a second conductor for use in a prefabricated cable accessory. The method comprises electrically connecting the first and second conductors by welding them together and filling a space between an outer surface of the welded conductor and an outer surface of a cable insulation of the first and second conductors by arranging a metal sleeve therebetween.

## Description

### TECHNICAL FIELD

The technology disclosed herein relates generally to the field of prefabricated accessories for conductors, and in particular to a method for connecting a first and a second conductor for a prefabricated cable accessory.

### BACKGROUND

High power cables passing a certain load current will heat up, and such heating during operation is a known problem. Overheating may have different reasons, e.g., because the cable conductor resistance does not fulfill requirements, cable type has been improperly chosen, lack of proper ventilation and heat dissipation etc. Overheating of, for instance, cable joints may occur for deficiently manufactured joints. Poor manufacturing technology for cable joints, may cause high contact resistance at the joint, which leads the power cable to generate heat. Further, internal defects in the cable joint may accelerate deterioration of insulation.

Overheating of power cable accessories results in breakdown both in the field, as well as in cable qualification tests, which in turn results in serious consequences and financial damage. From the above, it is clear that there is a need for addressing the problem of overheating of power cable accessories, such as, for instance, joints and terminations.

### SUMMARY

The overheating may occur for any type of contact, where the contact resistance is poor. Conductors of aluminum material and compacted versions are more prone for the overheating (due to the intrinsic properties of aluminum), but any type of conductor or profile may be overheated if the contact resistance is bad. The overheating may, for instance, occur for compacted aluminum conductors of High Voltage Direct Current (HVDC) cables having large cross sections and ferrule as connector. The problem of overheating is expected to become more pronounced with the increase of conductor size and/or power, and it is therefore highly important to find improvements in these regards, particularly since a solution is important not only for existing cable sizes but also for future ones.

An objective of embodiments herein is to address and improve various aspects for high voltage cables. A particular objective is to eliminate or at least reduce risk of overheating in a prefabricated accessory, such as cable terminations or joints used for interconnecting two high voltage cables. This objective and others are achieved by the methods and devices according to the appended independent claims, and by the embodiments according to the dependent claims.

According to a first aspect, a method is provided for connecting a first and a second conductor for use in a prefabricated cable accessory. The method comprises electrically connecting the first and second conductors by welding them together, and then filling a space between an outer surface of the welded conductor and an outer surface of an outer surface of a cable insulation of the first and second conductors, by arranging a metal sleeve therebetween.

The method entails several advantages. For instance, the method reduces risk of overheating, as such overheating is often caused in prefabricated cable accessories, such as e.g., cable joints, on cables with aluminium conductor with ferrule as the connector due to a poor contact resistance. The conductor welding reconstructs the conductor continuity and hence creates a relatively ideal contact point. By doing this, overheating of the cable accessory is avoided owing to improved performance in terms of oxidation and improved electrical as well as mechanical contact.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Figure 1a illustrates a sleeve and a first step of a method according to embodiments;
Figure 1b illustrates a longitudinally cut radial half of a sleeve according to embodiments;
Figures 1c illustrates a second step of a method according embodiments;
Figure 2 is an exploded view of a sleeve according to embodiments;
Figure 3a shows a front view and a side view of a sleeve according to embodiments;
Figure 3b illustrates a design example of a sleeve according to embodiments;
Figure 4 illustrates a conductor connected according to embodiments; and
Figure 5 is a flowchart of various embodiments of a method.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

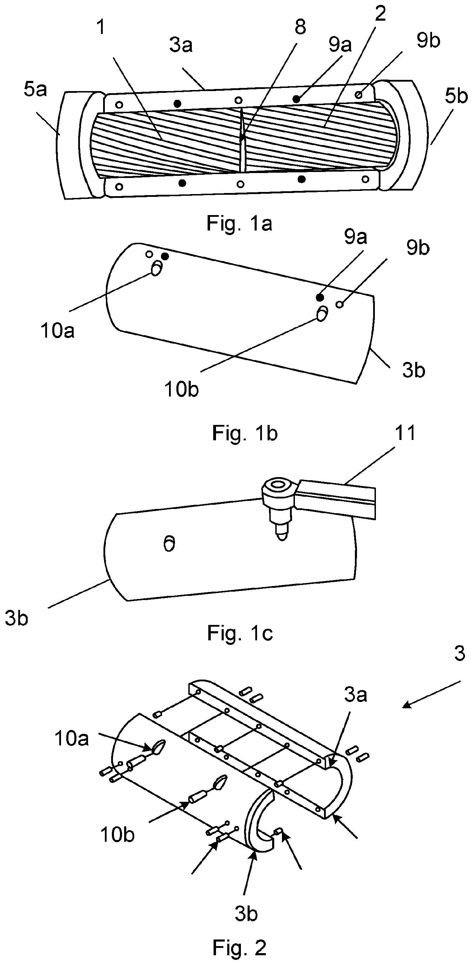

**FIG. 1a** illustrates a sleeve half 3a and a first step of a method according to various embodiments. In this first step, a first conductor 1 and a second conductor 2 of a first and a second cable are to be interconnected. The first and second conductors 1, 2 are to be arranged in a prefabricated cable accessory, which may, for instance, be a prefabricated cable joint. Although the prefabricated cable accessory is, in the following description, exemplified by a prefabricated cable joint, the person skilled in the art will realize that the method can be applied to other prefabricated cable accessories as well in a corresponding manner, for instance a cable termination.

The prefabricated cable accessory 6 typically comprises a body, in this case a joint body, comprising insulating material, and/or semiconductive and/or field grading materials e.g., made of Ethylene Propylene Diene Monomer (EPDM) rubber, silicone material, etc. The prefabricated cable joint may also comprise semiconductive material to shape, control and reduce the electric field, sometimes referred to as deflectors. It may still further comprise field grading material, for further field control, which maybe of linear or nonlinear field control characteristics. Furthermore, the prefabricated cable joint may also comprise protecting and shielding layers of metal and protecting layers of plastic.

The conductors 1, 2 of two different cables are to be electrically interconnected and a respective part of the conductor insulators 5a, 5b have therefore been removed. According to the present invention, the first and second conductors 1, 2 are welded together. Reference numeral 8 indicates where a weld will result, i.e., where the conductors 1, 2 are to be welded together. The welding method as such is not important, it may, for instance, be Tungsten Inert Gas (TIG) welding, Metal Inert Gas (MIG) welding, exothermic/thermite welding, gas welding, laser welding, cold welding etc. The welding may be performed in different configurations such as, for instance, wire to wire or strand to strand, butt welding, to mention a few examples.

There is now a space between an outer surface of the welded conductor 1, 2 and an outer surface of the cable insulations 5a, 5b. This space needs to be filled in order to minimize air trap, since air traps may lead to overheating problems, and also for avoiding a mechanically weak point. A cross-section of the space is ring-shaped, and its radial thickness may be defined by the difference between the cable insulation 5a, 5b radius and the conductor 1, 2 radius.

According to the present invention, a metal sleeve 3 is provided for filling the above-described space. The metal sleeve 3 comprises, in this example, two, longitudinally cut, radial halves 3a, 3b. The first radial half 3a is illustrated in figure 1a and the second radial half 3b in figure 1b (see also figure 2, showing both halves 3a, 3b). In preferred embodiments, both radial halves 3a, 3b have rounded edges. Such feature is beneficial in order to avoid electric field enhancement and also to avoid damaging the prefabricated cable joint body on the metal sleeve 3.

Each of the radial halves 3a, 3b of the metal sleeve 3 comprises a number of holes 9a, 9b, 10a, 10b (see also fig. 1b). The holes 9a, 9b, 10a, 10b enable the halves 3a, 3b of the metal sleeve 3 to be joined together in a secure way and to secure the electrical connection during the lifetime of the cable.

**FIG. 1b** illustrates a second longitudinally cut, radial half 3b. As mentioned above, the radial halves 3a, 3b comprise a number of holes 9a, 9b. A first set of the holes 9a, 9b is for screwing/tightening screws and for alignment purposes, e.g., by means of contact pins or guiding pins. A second set of holes 10 a, 10b is for introducing e.g., connection joints, and thereby ensure electrical connection of the metal sleeve 3 to the conductor. Adding such second set of holes 10a, 10b, for instance for contact joints, provides and secures electrical connection between the metal sleeve 3 and the conductor 1, 2 during the lifetime of the cable. The contact pin may be any solid, headless cylindrical metal rod machined to specified tolerances.

**FIG. 1c** illustrates a second step of a method according to embodiments. After completed welding, the metal sleeve halves 3a, 3b are arranged around the welded conductor 1, 2. The two radial halves 3a, 3b are placed on the conductor 1, 2 and joined together by means of the screws and contact pins using a suitable tool 11.

**FIG. 2** is an exploded view of the metal sleeve 3 according to embodiments. The two radial halves 3a, 3b of the sleeve 3 are shown and the mounting of them is indicated. The halves 3a, 3b may, for instance, be machined according to:
Step 1: a coarse machining
Step 2: splitting the metal sleeve 3 into two halves 3a, 3b
Step 3: machining of screw holes and contact pin holes
Step 4: the radial halves 3a, 3b are assembled to join the two cable ends
Step 5: fine machining

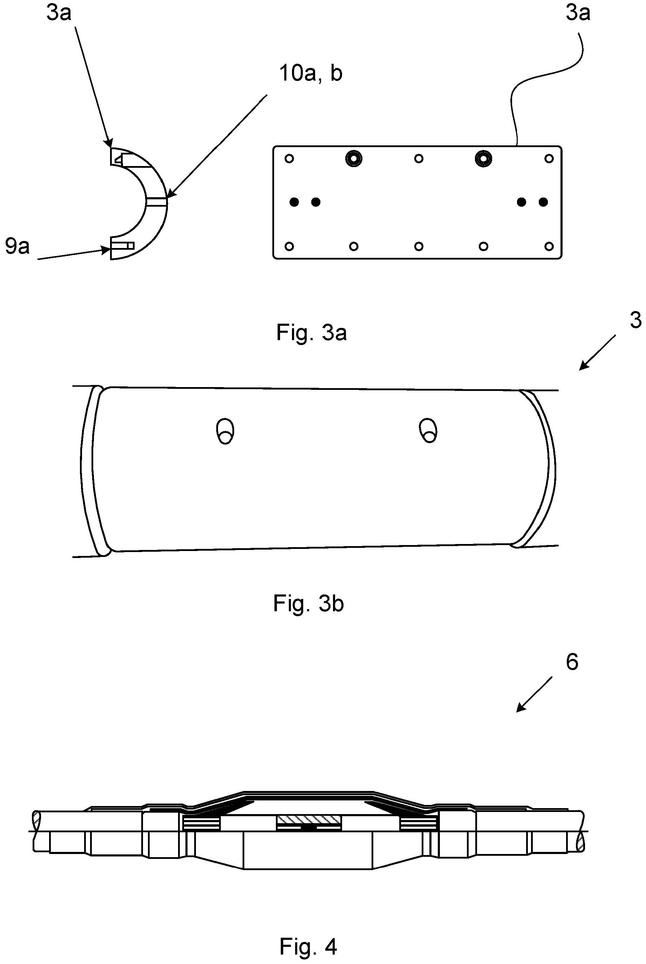

**Fig. 3a** shows a front view (at right-hand side) and a side view (at left-hand side) of a sleeve according to embodiments. The rightmost figure illustrates the holes of one of the longitudinally cut radial halves 3a, 3b. The leftmost figure illustrates in a side-cut view the holes 9a, for screws and contact pins, respectively, enabling correct mounting and electrical contact. It is noted that the number of holes 9a, 9b, 10a, 10b may be any suitable number, and not limited to the number illustrated in the figures.

**FIG. 3b** illustrates a design example of a metal sleeve 3 according to embodiments. In this figure, the metal sleeve 3 is illustrated mounted on the conductors 1, 2 when the halves 3a, 3b thereof have been matched together. The outer surface of the metal sleeve 3 is in line with the outer surface of the respective conductor insulations 5a, 5b. That is, the metal sleeve 3 essentially fills out space between the outer surface of the welded conductor 1, 2 and the outer surface of a cable insulation 5a, 5b.

**FIG. 4** illustrates a conductor 1, 2 connected according to embodiments, and ready for use in an exemplary prefabricated cable accessory 6. The conductor 1, 2 is surrounded by the metal sleeve 3, described herein in various embodiments, and may be arranged in the prefabricated cable accessory 6, for instance a pre-moulded joint as schematically illustrated in figure 4. The prefabricated cable accessory 6 may comprise a pre-moulded three-piece joint with heat-shrink outer protection, pre-moulded three-piece joint with housing outer protection, a prefabricated outdoor termination, to mention only a few examples and all known and available from NKT.

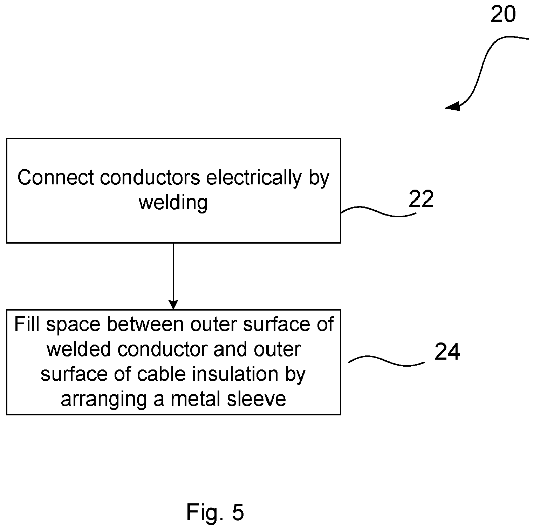

**Fig. 5** is a flowchart of a method according to various embodiments. In particular, the flowchart describes a method 20 for connecting a first and a second conductor 1, 2.

In step 22 of the method 20, the first conductor 1 and the second conductor 2 are electrically connected. This electrical connection is effectuated by welding them together, as has been described earlier. Welding gives an excellent contact point in comparison with, for example, solutions based on ferrule, connector etc, as the welding mimics the cable conductor 1, 2.

In step 24 of the method 20, a space between an outer surface of the welded conductor 1, 2 and an outer surface of a respective cable insulation 5a, 5b of the now joined cable conductors is filled. The filling is effectuated by arranging the metal sleeve 3 therebetween. The two radial halves 3a, 3b of the metal sleeve 3 are arranged on the conductor 1, 2 and joined together by means of, for instance, screws and contact pins into the holes 9a, 9b, 10a, 10b using a suitable tool 11. This has been described in detail with reference to figures 1a, 1b and 1c.

The disclosed method 20 for connecting a first and a second conductor 1, 2 for use in a prefabricated cable accessory 6 provides an improved contact. This in turn reduces, or even eliminates, a risk of overheating, as such overheating is often caused in prefabricated joints on cables with aluminium conductor with ferrule as the connector due to a poor contact resistance. The conductor welding according to the various embodiments herein removes additional contact resistance and thereby avoids overheating of the prefabricated cable accessory 6, owing, inter alia, to improved performance in terms of oxidation and improved electrical as well as mechanical contact.

The method 20 is applicable in, for instance, prefabricated joints with copper (Cu) conductors, in AC cable systems, in which a high-quality contact is important. The method 20 may also be applied for connecting the conductor 1, 2 to a busbar in a termination.

The first and second conductors 1, 2 that are to be electrically connected are prepared by removing all layers of the cable (e.g., insulation layers) for making the conductive connection of the conductors 1, 2.

In an embodiment, the method 20 comprises sizing the metal sleeve 3 such that the metal sleeve 3 essentially completely fills the empty space between the outer surface of the welded conductor 1, 2 and the outer surface of a cable insulation 5a, 5b.

In various embodiments, the arranging comprises placing two longitudinally cut radial halves 3a, 3b of the metal sleeve 3 together on the welded conductor 1, 2 and joining them together, for use in the prefabricated cable accessory 6.

In variations of the above set of embodiments, the method 20 comprises joining the radial halves 3a, 3b of the metal sleeve 3 together by means of one or more screws screwed into holes 9a, 9b, 10a, 10b provided in the radial halves 3a, 3b. In addition to this, contact pins and/or guiding pins may also be used in the joining for alignment purposes. These embodiments, including screws and/or contact joints ensure that the metal sleeve 3 makes electrical contact to the conductor 1, 2 and also mechanically fixes the metal sleeve 3 in its proper position. Additional connections, e.g., by screwing connecting wires between the metal sleeve 3 and the conductor 1, 2 may also be made in order to ensure electrical contact between the metal objects.

In some embodiments, the two halves 3a, 3b of the metal sleeve 3 have rounded edges.

In various embodiments, the radial halves 3a, 3b are identical to each other.

In various embodiments, the metal sleeve 3 is a solid cylinder longitudinally cut into two radial halves 3a, 3b. The metal cylinder 3 has an inner diameter matching an outer diameter of the welded conductor 1, 2 and an outer diameter matching an outer diameter of the cable insulation 5a, 5b or an inner diameter of a surrounding prefabricated cable accessory 6. That is, the empty space between the conductor 1, 2 radius and insulation 5a, 5b radius is filled by the metal sleeve 3.

In variations of the above set of embodiments, each of the two radial halves 3a, 3b comprises built-in screws. These screws are suitable for making electrical contact to the welded conductor 1, 2 and to mechanically fix the metal sleeve 3 at its intended position.

In various embodiments, the method 20 comprises adding an additional connection between the metal sleeve 3 and the welded conductor 1, 2. An example of such additional connection is to screw in connecting wires between the metal sleeve 3 and the welded conductor 1, 2. This ensures electrical contact between the metal objects.

It is noted that the metal sleeve 3 may be formed in other ways besides the cutting of a solid cylinder in two radial halves 3a, 3b. The thickness of the metal sleeve 3 may be reduced to form a metal sheath. In such embodiments, an air-filled space will remain between the metal sleeve 3 and the conductor 1, 2. An additional connection may then be made between the metal sleeve 3 and the conductor 1, 2 in order to have them at the same electrical potential. In such embodiments, the trapped air is thermally insulating and is thus more prone to overheating.

In various embodiments, the conductors 1, 2 comprises one of: stranded compacted or profiled (keystone) or segmented or solid structure made of a metal, for instance, Aluminium (Al) or Copper (Cu) operating under Direct Current (DC) or Alternating Current (AC) voltage or current.

In various embodiments, the arranging comprises joining two radial halves of the metal sleeve 3 by means of one or more screws screwed into the metal sleeve 3. Electrical contact is provided between the metal sleeve and conductors for example by means of screws which can be screwed into the metal sleeve 3, and/or by contact pins.

In an embodiment, the arranging comprises placing two radial halves 3a, 3b, which together make up the metal sleeve 3, on the welded conductor 1, 2. The longitudinal surfaces of the respective radial halves 3a, 3b are joined together in the prefabricated cable accessory 6, for instance by means of one or more screws screwed. The prefabricated cable accessory 6 may have been arranged on one of the cables 1, 2 before the herein disclosed method is applied. After completing the method, the prefabricated cable accessory 6, e.g., a joint or termination can be arranged on the jointed cables 1, 2, e.g., by pulling it over the jointed cable conductors 1, 2.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method (20) for connecting a first and a second conductor (1, 2) for use in a prefabricated cable accessory (6), the method (20) comprising:
- electrically connecting (22) the first and second conductors (1, 2) by welding them together, and
- filling (24) a space between an outer surface of the welded conductor (1, 2) and an outer surface of a cable insulation 5a, 5b of the first and second conductors (1, 2) by arranging a metal sleeve (3) therebetween.

2. The method (20) as claimed in claim 1, comprising sizing the metal sleeve (3) such that the metal sleeve (3) essentially completely fills the empty space between the outer surface of the welded conductor (1, 2) and the outer surface of the cable insulation (5a, 5b) of the first and second conductors (1, 2).

3. The method (20) as claimed in any of the preceding claims, wherein the arranging comprises placing two radial halves (3a, 3b) of the metal sleeve (3) together on the welded conductor (1, 2) and joining them together.

4. The method (20) as claimed in claim 3, comprising joining the radial halves (3a, 3b) of the metal sleeve (3) together by means of one or more screws introduced in holes (9a, 9b) provided on each radial half (3a, 3b).

5. The method (20) as claimed in claim 3 or 4, wherein the two halves (3a, 3b) of the metal sleeve (3) have rounded edges.

6. The method (20) as claimed in any of claims 3 - 5, wherein the radial halves (3a, 3b) are essentially identical.

7. The method (20) as claimed any of the preceding claims, wherein the metal sleeve (3) is a solid cylinder longitudinally cut into two radial halves (3a, 3b), wherein the metal cylinder (3) has an inner diameter matching an outer diameter of the welded conductor (1, 2) and an outer diameter matching an outer diameter of the cable insulation (5a, 5b) of the first and second conductors (1, 2).

8. The method (20) as claimed in any of claims 3 - 7, wherein each of the two radial halves (3a, 3b) comprises built-in screws for making electrical contact to the welded conductor (1, 2) and mechanically fixing the metal sleeve (3) at intended position.

9. The method (20) as claimed in any of the preceding claims, comprising aligning the two radial halves (3a, 3b) by introducing one or more guiding pins and/or contact pins into one or more holes (9a, 9b; 10a, 10b) of the two radial halves (3a, 3b).

10. The method (20) as claimed in any of the preceding claims, comprising adding an additional electrical connection between the metal sleeve (3) and the welded conductor (1, 2).

11. The method (20) as claimed in claim 10, wherein adding the additional connection comprises screwing connecting wires between the metal sleeve (3) and the welded conductor (1, 2).

12. The method (20) as claimed in any of the preceding claims, wherein the prefabricated cable accessory is one a cable joint and a cable termination.

13. The method (20) as claimed in any of the preceding claims, wherein the conductors (1, 2) comprise one of: stranded compacted or profiled (keystone) or segmented or solid structure made of a metal e.g. Aluminium (Al) or Copper (Cu) operating under Direct Current (DC), or Alternating Current (AC) voltage or current.
